# EUROPÄISCHE PATENTSCHRIFT

(11) **EP 1 002 421 B1**
(45) Veröffentlichungstag und Bekanntmachung des Hinweises auf die Patenterteilung: **20.03.2002**
(21) Anmeldenummer: 98946341.9
(22) Anmeldetag: 14.08.1998
(51) Int. Cl.: H04N 1/58, G06K 15/00

(54) **VORRICHTUNG UND VERFAHREN ZUM BEREITSTELLEN VON VORLAGEN FÜR DIE MEHRFARBENREPRODUKTION**
DEVICE AND METHOD FOR PREPARING DOCUMENTS FOR MULTICOLOUR REPRODUCTION
DISPOSITIF ET PROCEDE PERMETTANT DE PREPARER DES DOCUMENTS DESTINES A LA REPRODUCTION POLYCHROME

(30) Priorität: 14.08.1997 DE 19735380
(43) Veröffentlichungstag der Anmeldung: 24.05.2000
(73) Patentinhaber: Speck, Peter, 76137 Karlsruhe (DE)
(72) Erfinder: Speck, Peter, 76137 Karlsruhe (DE)
(74) Vertreter: VOSSIUS & PARTNER
(86) Internationale Anmeldenummer: EP9805174
(87) Internationale Veröffentlichungsnummer: WO9909734

(56) Entgegenhaltungen:
- EP-A- 0 445 066
- EP-A- 0 484 890
- WO-A-95/20796
- US-A- 5 204 918
- US-A- 5 313 570
- US-A- 5 636 337

## Beschreibung

Die vorliegende Erfindung betrifft eine Vorrichtung und ein Verfahren zum Bereitstellen von Vorlagen zur Mehrfarbenreproduktion, insbesondere zum Bereitstellen von Druckvorlagen für den Mehrfarbendruck.

Weit verbreitet ist das Drucken mit vier Farben, die überdeckend gedruckt werden. Zum Erzeugen eines Spektrums von Farben werden geeignete Überdeckungen der bunten Grundfarben Cyan, Magenta und Gelb sowie der unbunten Grundfarbe Schwarz nacheinander auf jeden Bildpunkt eines Trägers aufgebracht. Es können noch zusätzliche Farben aufgebracht werden, wie Gold, Silber, Lindgrün und andere. Durch entsprechende Wahl der Überdeckungsverhältnisse von zwei oder mehreren Farben können Mischfarben erzeugt werden, z.B. ergibt Cyan und Gelb die Farbe Grün.

Zum Mehrfarbendruck wird auch Siebdruck und sogenannter Flexodruck verwendet, bei denen mehrere reine Farben nacheinander auf einen Träger aufgebracht werden.

Beim Mehrfarbendruck wird der zu bedruckende Träger, vorzugsweise Papier, nacheinander an mehreren Druckplatten vorbeigeführt. Dabei müßen die einzelnen Druckplatten jeweils exakt zum vorbeilaufenden Träger ausgerichtet sein, damit die einzelnen Objekte bzw. Muster an die gewünschte Stelle aufgebracht werden. Beim Drucken können ebenso wie bei ähnlichen Verfahren zur Mehrfarbenreproduktion Ausrichtungsfehler auftreten. Beim Drucken sind diese Ausrichtungsfehler auf eine ungenaue Führung des Trägermaterials in der Transportvorrichtung und auch senkrecht dazu zurückzuführen. Es ist bekannt, solche Ausrichtungsfehler dadurch auszugleichen, daß die Farben einzelner Farbgebiete ganz oder teilweise in benachbarte Farbgebiete ausgedehnt werden. Dabei wird Farbe über die eigentlich vorgesehenen Farbgebiete hinaus auf den Träger aufgebracht. Diese sogenannte Uberfüllung wird nach vorgegebenen Entscheidungskriterien durchgeführt, wobei die Farben, die aneinandergrenzen können berücksichtigt werden.

In US-A-5 481 379 wird ein Verfahren zum Herstellen von Mehrfarbdruckplatten beschrieben, das solche Ausrichtungsfehler verringern soll. Dabei werden zunächst alle Bildelement-Paare untersucht, bei denen eine Änderung der Farbe zwischen aneinandergrenzenden Farbgebieten in bezug auf mindestens einen Farbauszug eintritt. Danach wird nach bestimmten Kriterien festgestellt, ob ein sogenannter Rahmen um ein Farbgebiet gelegt werden soll und welche Überdeckungswerte der Rahmen in den verschiedenen Farbauszügen haben soll. Als Beispiele werden Oberfüllungsregeln angegeben, wonach bestimmt wird, ob bei einem vorhandenen Farbpaar in Richtung einer Farbe überfüllt wird. Weiterhin werden Verknüpfungsregeln angegeben, durch die eine Überfüllfarbe im Rahmen festgelegt wird.

In US-A-5 542 052 wird ein Verfahren beschrieben, mit dem zuerst sogenannte Überfüllflächen für einzelne Farbgebiete erzeugt werden. Anschließend werden Flächenteile aus diesen vorläufigen Überfüllflächen ausgenommen, falls diese in unerwünschte Nähe anderer Farbgebiete fallen oder Überschneidungen mit bestehenden Überfüllflächen hervorrufen.

Der vorliegenden Erfindung liegt die Aufgabe zugrunde, eine Vorrichtung und ein Verfahren bereitzustellen zum Verringern von Ausrichtungsfehlern bei der Mehrfarbenreproduktion, insbesondere beim Mehrfarbendruck.

Diese Aufgabe wird gelöst mit den Merkmalen der Patentansprüche.

Der vorliegenden Erfindung liegt der Grundgedanke zugrunde, Farbgebiete zu analysieren und keine Ränder wie beim Stand der Technik. In einer bevorzugten Ausgestaltung des erfindungsgemäßen Verfahrens wird ausgehend von einem oder mehreren Farbgebieten, in denen Überfüllungen bestimmt werden sollen, jeweils eine Distanzkartierung durchgeführt.

Die Erfindung wird nachstehend anhand von Beispielen näher erläutert. Dabei wird auf folgende Figuren Bezug genommen:
Figur **1** zeigt den grundlegenden Ablauf des erfindungsgemäßen Verfahrens zur unabhängigen Durchführung aller Überfüllungsvorgänge einer Ausgangsvorlage.
Figur **2** zeigt den grundlegenden Ablauf des alternativen erfindungsgemäßen Verfahrens als Wiederholung gleichartiger Überfüllungsvorgänge.
Figur **3** zeigt den Ablauf eines einzelnen Überfüllungsvorgangs im grundlegenden Ablauf des erfindungsgemäßen Verfahrens in Figur **2**.
Figur **4** zeigt die Bildung von Überfüllungen im Ablauf eines einzelnen Überfüllungsvorgangs in Figur **3**.
Figur **5** zeigt eine beispielhafte Ausgangsvorlage.
Figur **6** zeigt Überfüllungsbestimmungsgebiete und Überfüllungsquellen, die zu zwei beispielhaften Überfüllungsvorgängen der Ausgangsvorlage in Figur **5** gehören.
Die Figuren **7a** bzw. **7b** vergleichen Überfüllungen, die mit einem euklidischen bzw. einem richtungsabhängigen Abstandsmaß gebildet wurden, in einem Ausschnitt der bearbeiteten Vorlage in Figur **9**.
Figur **8** zeigt die Bildung von Überfüllungen in einem Ausschnitt der Ausgangsvorlage in Figur **5**.
Figur **9** zeigt die mit dem erfindungsgemäßen Verfahren bearbeitete Vorlage des Beispiels in Figur **5**.
Figur **10** zeigt die grundsätzliche Vorgehensweise des erfindungsgemäBen Verfahrens an Engstellen von Gebieten, in denen Überfüliungen gebildet werden sollen.
Figur **11** zeigt die grundsätzliche Vorgehensweise des erfindungsgemäßen Verfahrens beim Überfüllen von Farbgebieten mit einem Farbverlauf.

Der grundlegende Ablauf des erfindungsgemäßen Verfahrens besteht vorzugsweise aus einer Einteilung einer aus Bildelementen bestehenden Ausgangsvorlage in verschiedene Farbklassen, der Durchführung unabhängiger Überfüllungsvorgänge innerhalb des Gebietes jeder Farbklasse ohne Verwendung bestimmter Überfüllungsregein und der Bildung von Überfüllungen durch Auswahl von Bildementen nach bestimmten Überfüllungsregein.

Im Sinne einer mathematischen Definition als Einteilung einer aus Bildelementen bestehenden Ausgangsvorlage in Farbklassen wird vorzugsweise eine Menge nichtleerer, paarweise verschiedener, aus Bildelementen bestehender Teilgebiete gebildet, die zusammen die Ausgangsvorlage ergeben.

Farbklassen sind Gebiete von Bildelementeng die voneinander getrennt sein können und hinsichtlich einer oder mehrerer Überfüllungsregeln äquivalent sind. Andere Bildelemente, vorzugsweise Bildelemente, die zum Hintergrund der Ausgangsvorlage gehören, können ebenfalls Farbklassen bilden. In den Farbklassen werden bevorzugt Farben unterschieden. Neben ihrer Farbe werden weiterhin bevorzugt typographische Elemente der Ausgangsvorlage als Farbklassen unterschieden. Weiterhin bevorzugt werden Gebiete von Bildelementen, die zu Bildzeichen oder Symbolen sowie Gebiete von Bildelementen, die zu Halbtonbildern, oder zu bestimmten Farbverläufen gehören, in Farbklassen eingeteilt.

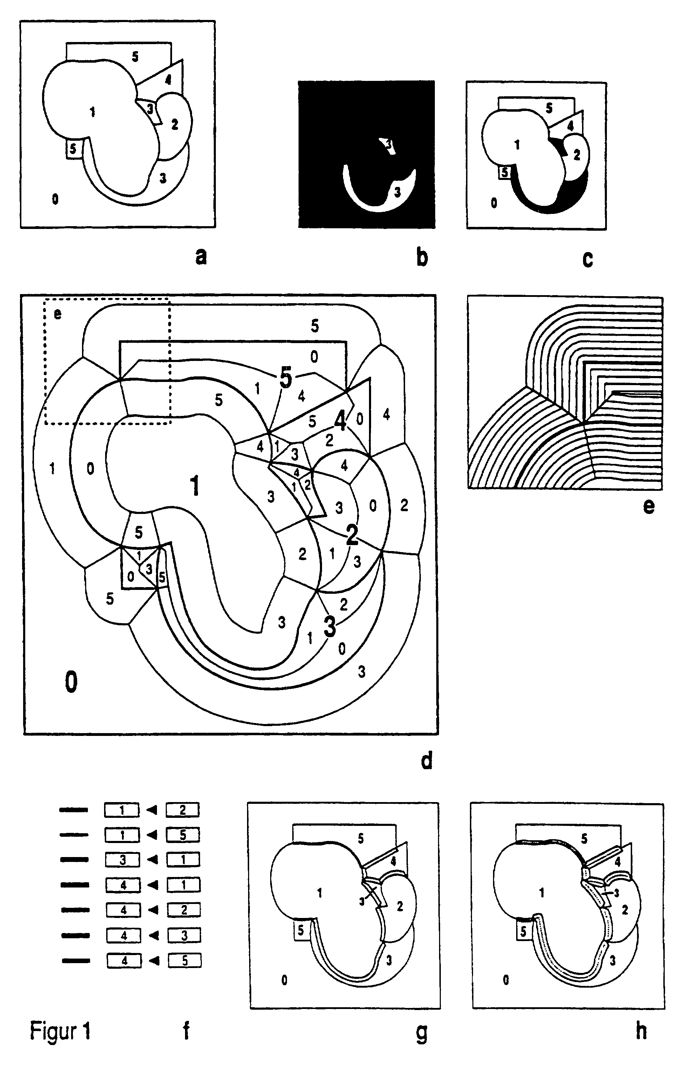

Figur **1a** zeigt beispielsweise eine Einteilung einer Ausgangsvorlage in sechs Farbklassen 0 bis 5.

Die Überfüllungen aller Farbklassen einer Ausgangsvorlage werden vorzugsweise voneinander unabhängig durchgeführt. Im Verlauf eines Überfüllungsvorgangs werden für Bildelemente innerhalb des Gebietes einer ersten Farbklasse unspezifische Überfüllungen von nächstgelegenen Bildelementen, die in Gebieten zweiter Farbklassen außerhalb liegen und Bildelemente der erste Farbklasse grundsätzlich überfüllen könnnen, vorläufig gebildet. Ferner werden Abstände der jeweiligen Bildelemente als Werte der zugehörigen Abstandsvektoren im Sinne eines bestimmten mathematischen Abstandsmaßes ermittelt.

Figur **1b** zeigt das Gebiet einer beispielhaft ausgewählten Farbklasse 3 (weiß dargestellt) und Figur **1c** zeigt diejenigen Farbklassen 0, 1, 2, 4, 5 (ebenfalls weiß dargestellt), welche die ausgewählte Farbklasse grundsätzlich überfüllen können.

Für jeden unabhängigen Überfüllungsvorgang einer Mehrzahl erster Farbklassen können mit Hilfe zugehöriger Distanzkartierungen zweite Farbklassen von Bildelementen außerhalb der ersten Farbklassen auf Bildelemente innerhalb der ersten Farbklassen als unspezifische Überfüllungen fortgepflanzt und Abstandsvektoren zwischen Bildelementen der ersten und zweiten Farbklassen ermittelt werden, wie folgt:

Im Gebiet jeder Farbklasse wird eine Distanzkartierung durchgeführt. Dabei seien den Bildelementen der Ausgangsvorlage Abstandsvektoren, die Farbklassen der Ausgangsvorlage als Ziel-Farbklassen sowie Start-Farbklassen zugeordnet. Die Start-Farbklassen sind leer und alle Abstandsvektoren weisen einen bestimmten Abstandsvektor auf, der einen bestimmten Höchstabstand ausdrückt. Alle Bildelemente der Vorlage werden nach einem bestimmten Schema mehr als einmal aufgesucht. Vorzugsweise werden die Bildelemente zeilenweise, einmal von der erstenzur letzten Bildzeile und ein zweites Mal von der letzten zur ersten Bildzeile abgetastet (gescannt). Dabei wird jedem Bildelement ein neuer Abstandsvektor zugeordnet, sofern sein Wert den Wert des alten Abstandsvektors im Sinne eines bestimmten mathematischen Abstandsmaßes unterschreitet. Der neue Abstandsvektor ergibt sich erstens aus dem Abstandsvektor zu einem seiner unmittelbaren Nachbarn, falls Bildelement und Nachbar in verschiedenen Ziel-Farbklassen liegen, oder zweitens aus der Summe des Abstandsvektors zu einem seiner unmittelbaren Nachbarn und dessen Abstandsvektor, falls sie in gleichen Ziel-Farbklassen liegen. Sofern der Abstandsvektor des Bildelements ersetzt wurde, wird im ersten Fall die Ziel-Farbklasse und im zweiten Fall die Start-Farbklasse des unmittelbaren Nachbarn als fortzupflanzende Start-Farbklasse des Hildelements eingetragen.

Figur **1d** stellt die Start- und Ziel-Farbklassen von so ermittelten unspezifischen Überfüllungen gemeinsam dar. Sie gehören zu der beispielhaften Einteilung der Ausgangsvorlage in sechs Farbklassen aus Figur **1a**. Die Gebiete der Start-Farbklassen sind durch kleine und die Gebiete der Ziel-Farbklassen durch große Zahlen dargestellt. Die Gebiete aller Farbklassen 0, 1, 2, 3, 4, 5 des Beispiels sind bis zu einem bestimmten Höchstabstand mit unspezifischer Überfüllungen überdeckt. Vorzugsweise wird der Höchstabstand für unspezifische Überfüllungen so gewählt, daß er der größten in einer bestimmten Überfüllungsregel vorkommenden Überfüllweite entspricht. Für das Beispiel in Figur **1d** wurde absichtlich ein großer Höchstabstand gewählt, um zu zeigen, daß Gebiete von Ziel-Farbklassen ganz von Gebieten von Start-Farbklassen überdeckt werden können. Im Beispiel von Figur **1d** werden die Gebiete der Farbklassen 2, 3, 4 und 5 vollständig und die Gebiete der Farbklassen 0 und 1 unvollständig von Gebieten von Start-Farbklassen überdeckt.

Für die ebenfalls ermittelten Abstandsvektoren zwischen Bildelementen von Ziel-Farbklassen und nächstgelegenen Bildelementen von Start-Farbklassen sind in Figur **1e** Linien gleichen Abstands bis zu einem bestimmten Höchst-abstand dargestellt. Dabei wurde ein euklidisches Abstandsmaß verwendet. Figur **1e** zeigt mit dem markierten Ausschnitt e von Figur **1d** eine Stelle des Beispiels an der drei Ziel-Farbklassen 0, 1 und 5 zusammentreffen.

Überfüllungen werden vorzugsweise gebildet durch Auswahl von Bildelementen aus unspezifischen Überfüllungen nach bestimmten Überfüllungsregeln. Eine Auswahl kann nach den zugehörigen Abstandsvektoren, sowie den zugehörigen Start- und Ziel-Farbklassen eines Bildelementes gebildet werden.

Zur Auswahl von Bildelementen aus unspezifischen Überfüllungen können die Werte der zugehörigen Abstandsvektoren im Sinne eines bestimmten mathematischen Abstandsmaßes ermittelt und nur solche Bildelemente berücksichtigt werden, die eine bestimmte Überfüllweite nicht überschreiten. Überfüllweiten können durch bestimmte Überfüllungsregeln festgelegt werden vorzugsweise für Bildelemente aus allen unspezifischen Überfüllungen oder für Bildelemente aus den Gebieten bestimmter Start-Farbklassen, bestimmter Ziel-Farbklassen oder bestimmter Paare von Start- und Ziel-Farbklassen.

Figur **1f** zeigt schematisch einen Satz beispielhafter Überfüllungsregeln. Die Pfeile weisen von Start-Farbklassen auf Ziel-Farbklassen. Bei diesem Beispiel überfüllen die Farbklassen 2 und 5 die Farbklasse 1, Farbklasse 1 überfüllt die Farbklasse 3 und die Farbklassen 1, 2, 3 und 5 überfüllen Farbklasse 4. Hier können beliebige Verknüpfungsregeln zwischen der Farbe oder Farben der Bildelemente aus den Gebieten der jeweiligen Start- und Ziel-Farbklassen angenommen werden. Beispielhaft wird als Verknüpfungsergebnis jeweils die Farbe oder Farben der Bildelemente aus dem Gebiet der Start-Farbklasse angenommen. Neben den Start- und Ziel-Farbklassen zeigt Figur **1f** noch die Überfüllweiten zu den jeweiligen Überfüllungsregeln. Sie sind schematisch durch Linienabschnitte verschiedener Weite angegeben. Bei diesem Beispiel sind alle Überfüllweiten gleich mit Ausnahme der Überfüllungen aus der Farbklasse 5 in die Farbklasse 1. Sie beträgt die Hälfte der übrigen Überfüllweiten.

Weiterhin können zur Auswahl von Bildelementen aus unspezifischen Überfüllungen die zugehörigen Start- und Ziel-Farbklassen daraufhin abgefragt und nur solche Bildelemente in der Auswahl berücksichtigt werden, deren Paare von Start- und Ziel-Farbklassen jeweils mit einem Paar von Start- und Ziel-Farbklassen einer bestimmten Überfüllungsregel übereinstimmen.

Figur **1g** stellt als Beispiel Überfüllungen dar, welche aus den unspezifischen Überfüllungen in Figur **1d** nach den Vorgaben der Überfüllungsregeln in Figur **1f** gebildet wurden. Die zweite Überfüllungsregel in Figur **1f** gibt an, daß die Farbklasse 5 die Farbklasse 1 überfüllt und zwar mit der Hälfte einer vorgegebenen Überfüllweite. Zur Auswahl gelangen Bildelemente der Start-Farbklasse 5 und der Ziel-Farbklasse 1 aus den unspezifischen Überfüllungen in Figur **1d**, deren Abstandsvektoren Werte im Sinne einer mathematischen Abstandsfunktion aufweisen, welche die halbe vorgegebene Überfüllweite nicht überschreiten. Figur **1g** zeigt sie als schmale Überfüllungen im Gebiet der Ziel-Farbklasse 1. Die übrigen Überfüllungsregeln in Figur **1f** geben an, daß die Farbklasse 2 die Farbklasse 1, die Farbklasse 1 die Farbklasse 3 sowie die Farbklassen 1, 2, 3 und 5 die Farbklasse 4 überfüllen und zwar mit der ganzen vorgegebenen Überfüllweite. Zur Auswahl gelangen Bildelemente mit den (Start, Ziel)-Farbklassenpaaren (2,1), (1,3), (1,4), (2,4), (3,4) und (5,4) aus den unspezifischen Überfüllungen in Figur **1d**, deren Abstandswerte die ganze vorgegebene Überfüllweite nicht überschreiten. Figur **1g** zeigt sie als Überfüllungen in den Gebieten der Ziel-Farbklassen 3 und 4.

Die Bildung von Überfüllungen durch Auswahl von Bildelementen in unspezifischen Überfüllungen kann, wie hier beispielhaft beschrieben wurde, durch eine gemeinsame Auswahl nach Farbklassenpaaren und Abstandswerten, getrennt nach Abstandswerten und Farbklassenpaaren oder getrennt nach Farbklassenpaaren und Abstandswerten erfolgen.

Es sei ausdrücklich bemerkt, daß das erfindungsgemäße Verfahren nicht auf einen Satz bestimmter Überfüllungsregeln beschränkt ist. Vielmehr würde eine andere Vorgabe von Überfüllungsregeln als beispielsweise in Figur **1f** angegeben andere Überfüllungen festlegen und damit zu anderen Ergebnissen führen.

Die Erfindung ist verwendbar für Vorlagen, die ganz oder teilweise aus geometrischen Darstellungen bestehen, die Strecken- oder Kurvenzüge enthalten (Vektordarstellungen) zur Wiedergabe graphischer Objekte insbesondere auf Kathodenstrahlröhren oder im Mehrfarbendruck. Dazu kann ein an sich bekanntes Verfahren zur Umwandlung von Vektordarstellungen in Rasterdarstellungen, vorzugsweise in Matrizen von Bildelementen verwendet werden.

Weiterhin können mit der Erfindung Paare von Farbklassen aus unspezifischen Überfüllungen für eine Mehrzahl von Bildelementen der Ausgangsvorlage, insbesondere nach der Auswahl nach Abstandswerten, unter Verwendung bestimmter Überfüllungsregeln unmittelbar für Überfüllungen ausgewählt werden.

Zur mittelbaren Auswahl von Farbklassenpaaren und zugehörigen Bildelementen, insbesondere nach der Auswahl nach Abstandswerten, werden in einer bevorzugten Ausgestaltung des erfindungsgemäßen Verfahrens geometrische Darstellungen verwandt, welche Bildelemente, die zu gleichen Paaren von Start-und Ziel-Farbklassen gehören, durch ihre Umrisse beschreiben (vektorisieren). Insbesondere kann dazu ein Verfahren des Anmelders verwendet werden, das unter dem eingetragenen Warenzeichen Vectory vertrieben wird.

Gemäß einer alternativen Ausführungsform des erfindungsgemäßen Verfahrens können Überfüllungen nach beiden Seiten benachbarter Farbklassen aus unspezifischen Überfüllungen gebildet werden, insbesondere nach der Auswahl nach Abstandswerten und, wenn Überfüllungen nach bestimmten Überfüllungsregeln gebildet werden sollen, in denen jedes Farbklassenpaar höchstens einmal vorkommt. Dazu werden Bildelemente unspezifischer Überfüllungen mit symmetrischen Farbklassenpaaren z.B. (1,2) und (2,1) gemeinsam für Überfüllungen nach beiden Seiten des jeweiligen Paares von Farbklassen, falls eines der zugehörigen symmetrische Farbklassenpaare in einer bestimmten Überfüllungsregel vorkommt. Im Beispiel Überfüllungsregeln von Figur **1f** sind das die Farbklassenpaare (2,1), (5,1), (1,3), (1,4), (2,4), (3,4) und (5,4). Es entstehen Überfüllungen nach beiden Seiten, welche die Gebiete der folgenden Farbklassen verbinden: 2 und 1, 5 und 1, und 3, 1 und 4, 2 und 4, 3 und 4 sowie 5 und 4. Sie sind in Figur **1h** gezeigt. Hier ist eine vorherige Auswahl der Bildelemente aus den unspezifischen Überfüllungen in Figur **1d** nach Abstandswerten gemäß der Überfüllweiten in den beispielhaft vorgegebenen Überfüllungsregeln von Figur **1f**.

Als Ergebnis der Verknüpfung der Farben in den jeweiligen Start- und Ziel-Farbklassen der so gebildeten Überfüllungen nach beiden Seiten kann eine Farbe gebildet werden, welche in Kombination mit der Start-Farbklasse, vorzugsweise durch Überdrucken, die Farbe der Start-Farbklasse nicht verändert, und in Kombination mit der Farbe der Ziel-Farbklasse, vorzugsweise durch Überdrucken, die in der zugehörigen Überfüllungsregel festgelegte überfüllfarbe ergibt. Hier wurde als Ergebnis die Farbe der Start-Farbklasse aus der jeweiligen Überfüllungsregel angenommen.

Eine bevorzugte Anwendung von Überfüllungen nach beiden Seiten besteht darin, die Richtung von Überfüllungen nachträglich, mit möglichst geringem Aufwand umzukehren. Das kann durch einfache Änderung der Verknüpfungsfarbe geschehen. Im obigen Beispiel wird eine Umkehrung der Überfüllrichtung durch Ersetzen der Farbe der Start-Farbklasse mit der Farbe der Zielfarbklasse aus der jeweiligen Überfüllungsregel im Verknüpfungsergebnis erreicht.

Mit der Erfindung können vektorisierte Darstellungen der Überfüllungen nach beiden Seiten gebildet werden, vorzugsweise unter Verwendung eines an sich bekannten Vektorisierungsverfahrens.

In einer bevorzugten Ausführungsform des erfindungsgemäßen Verfahrens können Ergebnisse in Rasterform, Vektorform oder in aus Vektorform zurückgewonnener Rasterform gebildet werden und der Ausgangsvorlage in Raster- oder Vektorform hinzugefügt oder mit ihr verknüpft werden.

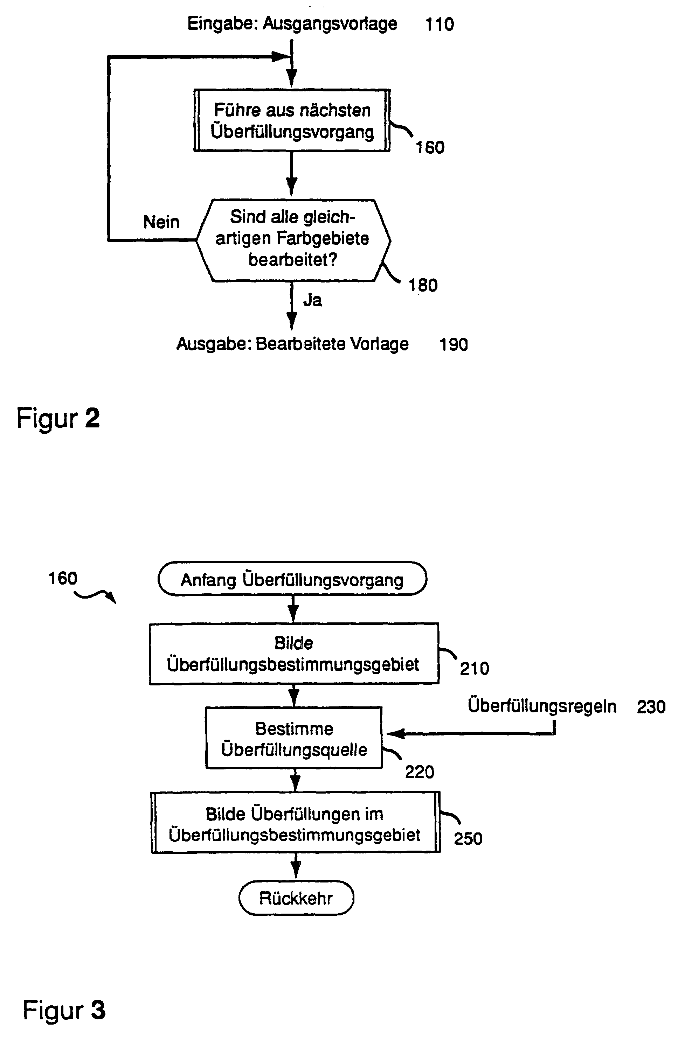

In Figur **2** ist der grundlegende Ablauf des alternativen erfindungsgemäßen Verfahrens als Wiederholung gleichartiger Überfüllungsvorgänge dargestellt. Für eines oder mehrere erste gleichartige Farbgebiete wird ein Überfüllungsvorgang **160** mit der Ausgangsvorlage **110** durchgeführt. Der Überfüllungsvorgang wird mit einem oder mehreren weiteren gleichartigen Farbgebieten durch die Rückführung **180** solange wiederholt, bis alle gleichartigen Farbgebiete der Ausgangsvorlage **110** bearbeitet sind, und die bearbeitete Vorlage **190** ausgegeben werden kann.

Als gleichartiges Farbgebiet wird aufgefaßt eines oder mehrere Farbgebiete, die voneinander getrennt sein können, mit gleicher oder ähnlicher Farbcharakteristik. Als von gleicher Farbcharakteristik werden Gebiete angesehen, deren Bildelemente gleiche Farben tragen. Als von ähnlicher Farbcharakteristik werden alle übrigen vorbestimmten Gebiete angesehen, einschließlich Gebiete mit Farbverläufen, Gebiete, die aus Halbtonbildern oder Teilgebieten von Halbtonbildern bestehen, sowie vom Anwender bestimmte Teilgebiete der Ausgangsvorlage **110**.

Es wird nun auf Figur **3** bezug genommen. In einem einzelnen Überfüllungsvorgang **160** wird durch Auswahl aus der Ausgangsvorlage **110** eines oder mehrerer gleichartiger Farbgebiete, die voneinader getrennt sein können, ein Überfüllungsbestimmungsgebiet gebildet **210**, in dem Überfüllungen von Farben benachbarter Farbgebiete bestimmt werden sollen. Als Überfüllungsquelle werden bestimmt im Schritt **220** Bildelemente der Ausgangsvorlage **110** oder eines Zwischenergebnisses der bearbeiteten Vorlage **190**, deren Farbe die Farbe oder Farben der Bildelemente im Überfüllungsbestimmungsgebiet nach bestimmten Überfüllungsregeln überfüllen können.

Die Überfüllungsregeln **230** können als Datenbestände allgemein oder für einzelne Augangsvorlagen besonders vorgegeben sein, oder aus Farbpaaren errechnet werden.

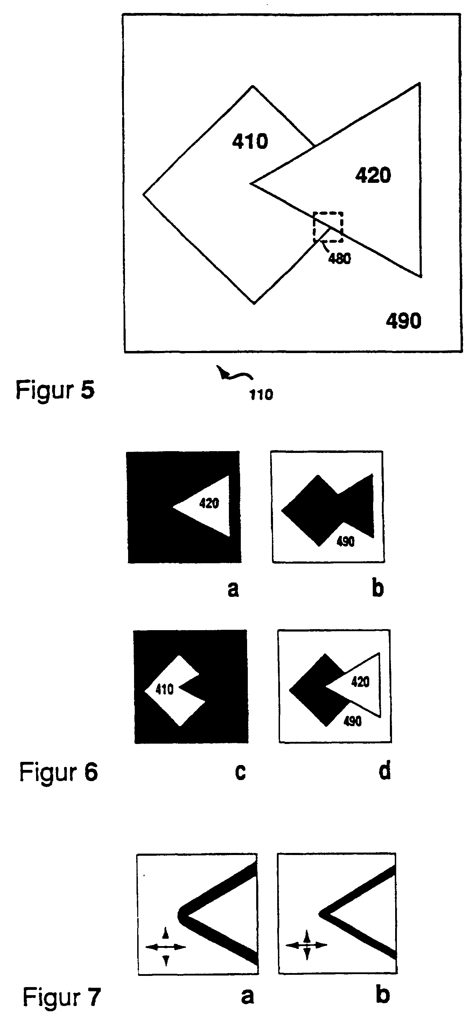

Um die Bildung von Überfüllungen **250** im Überfüllungsbestimmungsgebiet nach einer bevorzugten Ausgestaltung des erfindungsgemäßen Verfahrens näher zu erläutern, sei eine beispielhafte Ausgangsvorlage **110** in Figur **5** betrachtet. Sie zeigt ein schwarzes, auf der Spitze stehendes Quadrat **410,** das von einem cyanfarbenen Dreieck **420** teilweise überdeckt wird, beide befinden sich auf einem gelben Hintergrund **490**.

In der nachstehend beschriebenen Ausgestaltung des erfindungsgemäßen Verfahrens werden einfache Überfüllungsregeln **230** zugrundegelegt, die in den einzelnen Überfüllungsvorgängen **160** angewandt werden. Eine Möglichkeit besteht zum Beispiel darin, daß zu jeder Farbe in der Ausgangsvorlage **110** festgelegt ist oder festgelegt wird, von welchen anderen Farben sie überfüllt werden kann. Dabei ist auch möglich, daß eine Farbe von keiner oder nur von einer Farbe überfüllt werden kann.

Die genannten Farbpaare können zum Beispiel dadurch aufgestellt werden, daß angenommen wird, die dunklere von zwei Farben werde von der helleren Farbe überfüllt. Von den Farben der in Figur **5** betrachteten Ausgangsvorlage **110** ist Schwarz die dunkelste, Cyan von mittlerer Helligkeit und Gelb die hellste Farbe. Gelb wird von keiner Farbe, Cyan von Gelb und Schwarz von allen übrigen Farben überfüllt. Überall dort, wo in diesem Beispiel zwei verschiedene Farben aneinanderstoßen, wird die dunklere Farbe von der helleren Farbe überfüllt. Aus den beiden übereinander, am gleichen Ort wiedergegebenen Farben entsteht eine Überfüllfarbe.

Im Gegensatz zu bekannten Verfahren nach dem Stand der Technik vergleicht dieses alternative erfingungsgemäße Verfahren keine benachbarten Bildelemente daraufhin, ob sie zu zwei aneinandergrenzenden Gebieten gehören. Neben der damit verbundenen Ersparnis des zum Teil erheblichen Rechenaufwands ist es für die geschilderte Festlegung von Farbpaaren als Überfüllungsregeln unerheblich, ob ein Farbpaar auch tatsächlich in zwei benachbarten Bildelementen der Ausgangsvorlage **110** vorkommt.

Eine bevorzugte Ausgestaltung des erfindungsgemäßen Verfahrens bildet dagegen alle Überfüllungen auf einmal, die ein bestimmtes Gebiet im oben beschriebenen Sinn überfüllen, als begrenzte Ausweitungen der zugehörigen benachbarten Gebiete.

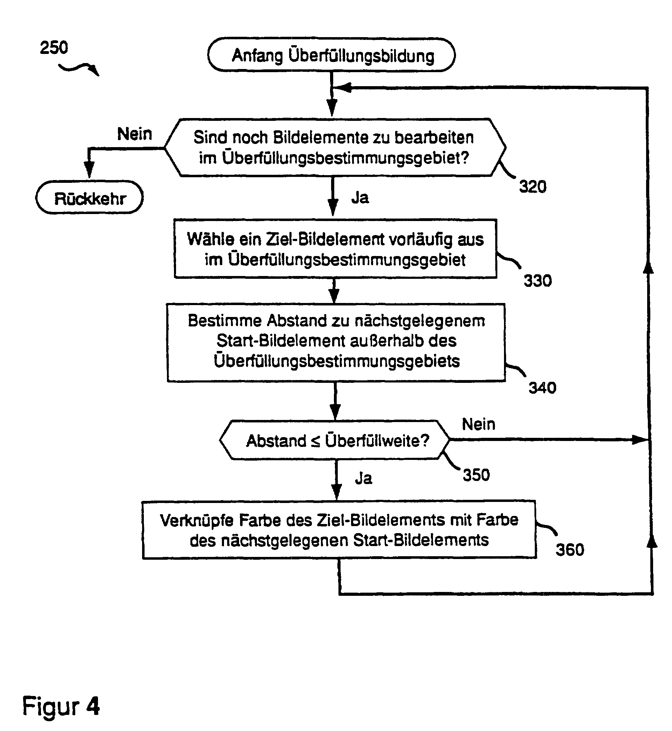

Zur Erläuterung des grundlegenden Gedankens wird im folgenden auf die Figuren **3** und **4** Bezug genommen. Die einzelnen Überfüllungsvorgänge ergeben sich aus den in der Ausgangsvorlage **110** vorhandenen, jeweils gleichartigen Farbgebieten, die nach den vorgegebenen Überfüliungsregeln **230** von anderen Farben überfüllt werden. Aus den beispielhaft betrachteten Überfüllungsregeln **230** ergibt sich für die Ausgangsvorlage **110**, daß Cyan von Gelb im ersten Überfüllungsvorgang, sowie daß Schwarz von Cyan und Gelb im zweiten Überfüllungsvorgang überfüllt wird. Die Reihenfolge der Überfüllungsvorgänge, das heißt die Reihenfolge wiederholter Ausführungen der Befehlsfolge **160**, ist willkürlich gewählt.

Zur Erläuterung eines Überfüllungsvorgangs sei auf das Ablaufdiagramm in Figur **3** verwiesen. Nachdem ein Überfüllungsbestimmungsgebiet gebildet **210** und eine Überfüllungsquelle bestimmt **220** wurde nach den Überfüllungsregeln **230,** werden in der Befehlsfolge **250** alle Überfüllungen gebildet, aus der Überfüllungsquelle in das Überfüllungsbestimmungsgebiet. Anschließend erfolgt der Schritt **180** (siehe Figur **2**).

Es sei ausdrücklich bemerkt, daß das erfindungsgemäße Verfahren nicht auf einen Satz bestimmter Überfüllungsregeln **230** beschränkt ist. Vielmehr würde eine andere Vorgabe von Überfüllungsregeln **230** andere Überfüllungsquellen festlegen **220** und damit zu anderen Ergebnissen in der bearbeiteten Vorlage **190** führen.

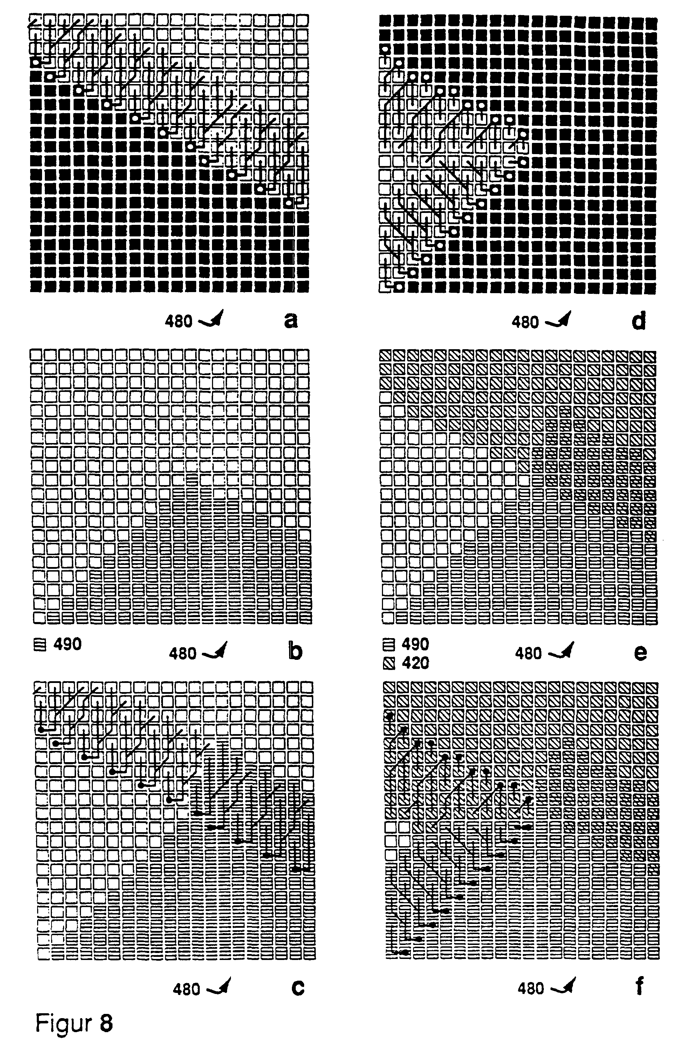

Figur **8** zeigt die Bildung von Überfüllungen in dem in Figur **5** markierten Ausschnitt **480** der Ausgangsvorlage **110**.

Die Ausgangsvorlage **110** enthält drei Farben: Gelb, Cyan und Schwarz. Es sei angenommen, daß jede Farbe einen eigenen Farbauszug hat und für sich wiedergegeben, z. B. gedruckt wird. Den einfachen Überfüllungsregeln entsprechend: (i) Cyan wird von Gelb überfüllt und (ii) Schwarz wird von Gelb und Cyan überfüllt, werden die Überfüllungen in zwei Überfüllungsvorgängen gebildet. Den beiden einzigen Farbgebieten der Farben Cyan und Schwarz in der Ausgangsvorlage **110** entsprechend werden im ersten Überfüllungsvorgang die Überfüllungen von Cyan und im zweiten Überfüllungsvorgang die Überfüllungen von Schwarz gebildet.

Die Figuren **8a** und **8d** zeigen die Überfüllungsbestimmungsgebiete während des ersten bzw. zweiten Überfüllungsvorgangs im Ausschnitt 480 der Ausgangsvorlage 110. Die Figuren **8b** und **8e** zeigen die zugehörigen Überfüllungsquellen und die Figuren **8d** und **8f** schließlich die Überfüllungen, die im ersten und zweiten Überfüllungsvorgang gebildet werden.

Das Überfüllungsbestimmungsgebiet des ersten Überfüllungsvorgangs besteht aus allen Bildelementen, welche die Farbe Cyan tragen. In einem oder mehreren Hilfsfarbkanälen wird eine Distanzkartierung des Überfüllungsbestimmungsgebiets durchgeführt.

Das Gebiet der Distanzkartierung ist als Ausschnitt in Figur **8a** und zur Übersicht in Figur **6a** weiß dargestellt. Eine Distanzkartierung gibt an, wie weit ein Bildelement des Kartierungsgebiets von einem nächstgelegenen Bildelement außerhalb des Kartierungsgebiets entfernt ist.

In Figur **8a** sind der Übersichtlichkeit halber nur Entfernungen bis zu einer angenommenen Überfüllungsweite von sechs Pixel berücksichtigt. Ein Pixel bezeichnet als Längeneinheit die Ausdehnung eines Bildelements. Diejenigen Ziel-Bildelemente, die dasselbe nächstgelegene Start-Bildelement außerhalb des Überfüllungsbestimmungsgebiets haben, sind in Figur **8a** durch Streckenzüge verbunden dargestellt. Start-Bildelemente sind durch weiße Punkte dargestellt. Die Entfernungen selbst sind weggelassen.

Die Überfüllungsquelle besteht aus allen Bildelementen, deren Farbe die Farbe oder Farben der Bildelemente im Überfüllungsbestirnrnungsgebiet überfüllen. Sie sind im ersten Überfüllungsvorgang des betrachteten Beispiels durch den Farbauszug der Farbe Gelb bestimmt. Die Überfüllungsquelle ist als Ausschnitt in Figur **8b** und zur Übersicht in Figur **6b** dargestellt. Im ersten Überfüllungsvorgang werden die Überfüllungen im Farbauszug der Farbe Gelb angelegt.

Zur Erörterung weiterer Einzelheiten zur Bildung von Überfüllungen **250** sei auf das Flußdiagramm in Figur **4** hingewiesen. Falls im Befehlsschritt **320** nicht festgestellt wird, daß das Überfüllungsbestimmungsgebiet leer ist, wird im Befehlsschritt **330** ein erstes Ziel-Bildelement aus dem Überfüllungsbestinunungsgebiet vorläufig ausgewählt. Für das Ziel-Bildelement wird im Befehlsschritt **340**, vorzugsweise durch "Nachschlagen" in einer Distanzkartierung des Überfüllungsbestimmungsgebiets, der Abstand zu einem nächstgelegenen Start-Bildelement außerhalb des Überfüllungsbestimmungsgebiets ermittelt. Ist der Abstand kleiner oder gleich der vorgegebenen Überfüllweite, dann wird die nächste Befehlsfolge **360** ausgeführt. Andernfalls bzw. nach Bearbeitung der Befehlsfolge **360** wird wieder der Verzweigungsschritt **320** ausgeführt und gegebenenfalls mit den Befehlsschritten **330, 340, 350** und **360** solange wiederholt, bis alle Bildelemente des Überfüllungsbestimmungsgebiets bearbeitet sind und die Rückkehr zum Ende der Befehlsfolge **250** durch den Befehl **320** erfolgen kann. In der Befehlsfolge **360** werden die Überdeckungswerte der Farbauszüge des Ziel-Bildelements mit Überdeckungswerten der Farbauszüge des Start-Bildelements verknüpft und zwar in denjenigen Farbauszügen, in denen die Überfüllung angelegt werden soll. Im ersten Überfüllungsvorgang des betrachteten Beispiels wird der Überdeckungswert des Farbauszugs der Farbe Gelb vom Start-Bildelement auf das Ziel-Bildelement übertragen (siehe Figur **8c**).

Das Überfüllungsbestimmungsgebiet des zweiten Überfüllungsvorgangs besteht aus allen Bildelementen, welche die Farbe Schwarz tragen. In einem oder mehreren Hilfsfarbkanälen wird eine Distanzkartierung des Überfüllungsbestimmungsgebiets durchgeführt.

Das Überfüllungsbestimmungsgebiet des zweiten Überfüllungsvorgangs ist als Ausschnitt in Figur **8d** und zur Übersicht in Figur **6c** weiß dargestellt. Wieder sind nur Entfernungen bis zu einer angenommenen Überfüllweite von sechs pixel berücksichtigt.

Die Überfüllungsquelle besteht aus allen Bildelementen, deren Farbe die Farbe oder Farben der Bildelemente im Überfüllungsbestimmungsgebiet überfüllen. Sie sind im zweiten Überfüllungsvorgang des betrachteten Beispiels durch die Farbauszüge der Farben Gelb und Cyan bestimmt. Die Überfüllungsquelle ist als Ausschnitt in Figur **8e** und zur Übersicht in Figur **6d** dargestellt. Figur **8e** zeigt auch die bereits im ersten Überfüllungsvorgang gebildete Überfüllung von Cyan durch Gelb. Bei der Wiedergabe der übereinanderliegenden Farben Gelb und Cyan in diesem Bereich entsteht beispielsweise ein grüner Farbton.

Im zweiten Überfüllungsvorgang werden die Überfüllungen in den Farbauszügen der Farben Gelb und Cyan angelegt.

In jedem Bildelement des Überfüllungsbestimmungsgebiets, dem ein nächstgelegenes Bildelement außerhalb des Überfüllungsbestimmungsgebiets näher als eine vorgegebene Überfüllungsweite liegt, werden die Überdeckungswerte der Farbauszüge der Überfüllungsquelle dieses nächstgelegenen Bildelements eingetragen (siehe Figur **8f**). Bei der Wiedergabe der übereinanderliegenden Farben in diesem Bereich entsteht beispielsweise ein durch Gelb bzw. Cyan übersättigter schwarzer Farbton.

Eine andere Möglichkeit die Überfüllungsquelle eines Überfüllungsvorgangs **160** zu bestimmen, besteht beispielsweise darin, eine Maske zu bestimmen, die für jedes Bildelement angibt, welche Überdeckungswerte von Farbauszügen als Überfüllungsquelle verwendet werden sollen: entweder die konstanten Überdeckungswerte der Nullüberdeckung oder die Überdeckungswerte von Farbauszügen der Ausgangsvorlage **110** bzw eines Zwischenergebnisses. Im Befehlsschritt **360** kann anstelle der einfachen Verknüpfungsregel des Übertragens von Überdeckungswerten von Farbauszügen zwischen Start- und Ziel-Bildelementen beispielsweise eine Verknüpfungsregel treten, welche die Maxima von Überdeckungswerten von Farbauszügen von Start- und Ziel-Bildelementen als Überdeckungswerte von Farbauszügen des jeweiligen Ziel-Bildelements übernimmt.

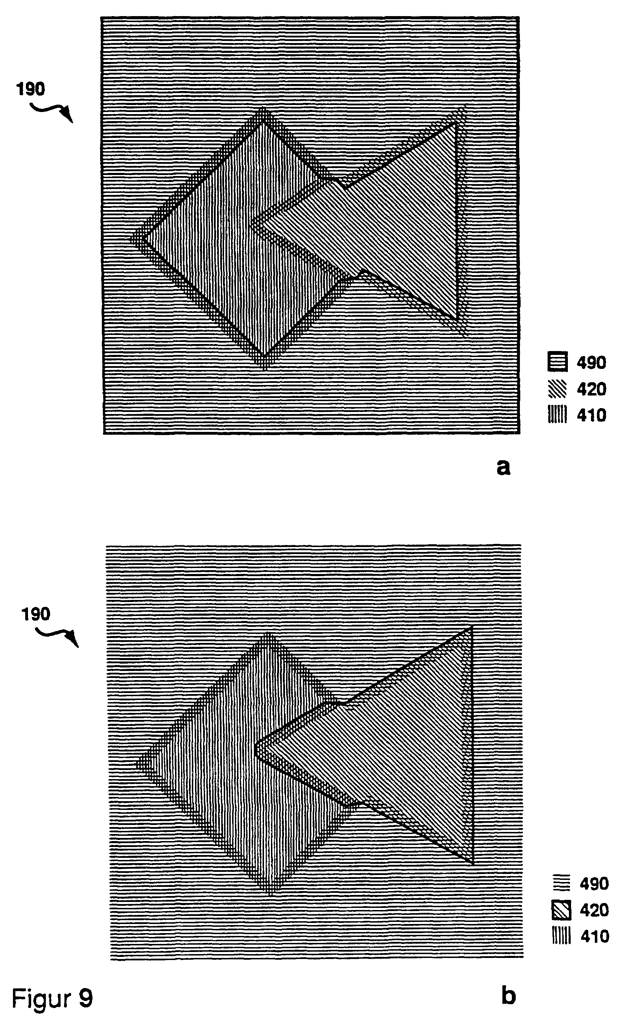

Figur **9** zeigt die mit dem erfindungsgemäßen Überfüllungsverfahren bearbeitete Vorlage **190** des betrachteten Beispiels: alle Farbauszüge, Gelb, Cyan und Schwarz, sind übereinanderliegend mit Überfüllungen dargestellt. Der Farbauszug der Farbe Schwarz wurde nicht verändert. In Figur **9a** ist der Farbauszug der Farbe Gelb, in Figur **9b** der Farbauszug der Farbe Cyan durch Umrandung der darin enthaltenen Farbflächen hervorgehoben.

Das vorstehend erläuterte Beispiel ist anhand von Farben in jeweils eigenen Farbauszügen für Gelb, Cyan und Schwarz beschrieben worden. Wie angegeben können beliebige Farben verwendet werden. Das Verfahren ist allgemein verwendbar.

Als ein weiteres Beispiel werden für die Gebiete **490**, **420** und **410** der Ausgangsvorlage **110** Farben mit den Farbauszügen nach folgender Aufstellung gewählt:

| | **490** | **420** | **410** |
|---|---|---|---|
| **C** | 20 | 60 | 80 |
| **M** | 60 | 20 | 50 |
| **Y** | 60 | 60 | 30 |
| **K** | 10 | 10 | 10. |

Es bedeuten **C** Cyan, **M** Magenta, **Y** Gelb und K Schwarz. Als erste Überfüllungsregel wird angenommen, daß die Farbe des Gebiets **420** von der Farbe des Gebiets **490** überfüllt wird und die beiden Farben zu der Überfüllfarbe verknüpft werden, die in der folgenden Aufstellung mit **U1** bezeichnet ist:

| | **420** | **490** | **U1** |
|---|---|---|---|
| **C** | 60 | 20 | 60 |
| **K** | 20 | 60 | 60 |
| **Y** | 60 | 60 | 60 |
| **K** | 10 | 10 | 10. |

Als zweite und dritte Überfüllungsregel werden angenommen, daß die Farbe des Gebiets **410** von der Farbe des Gebiets **420** mit der resultierenden Überfüllfarbe **U2** und von der Farbe des Gebiets **490** mit der resultierenden Überfüllfarbe **U3** in den folgenden Aufstellungen überfüllt wird:

| | **410** | **420** | **U2** |
|---|---|---|---|
| **C** | 80 | 60 | 80 |
| **M** | 50 | 20 | 50 |
| **Y** | 30 | 60 | 60 |
| **K** | 10 | 10 | 10 |

und

| | **410** | **490** | **U3** |
|---|---|---|---|
| **C** | 80 | 20 | 80 |
| **H** | 50 | 60 | 60 |
| **Y** | 30 | 60 | 60 |
| **K** | 10 | 10 | 10. |

Die erste Überfüllungsregel bestimmt die Überfüllungen des Gebiets der Farbe **420**, des ersten Überfüllungsbestimmungsgebiets in Figur **6a.** Die zweite und dritte Überfüliungsregel bestimmen die Überfüllungen des Gebiets der Farbe **410**, des zweiten Überfüllungsbestimmungsgebiets in Figur **6b**.

Figur **7a** zeigt in einem Ausschnitt der bearbeiteten Vorlage in Figur **9** einen Teil der Überfüllung des cyanfarbenen Dreiecks **420** in das schwarze Quadrat **410**. Bei der Abstandsbestimmung im Befehlsschritt **340** (siehe Figur **4**) wurde ein euklidisches Abstandsmaß verwendet, bei dem sich beispielsweise der Abstand zwischen zwei Bildelementen von drei Bildzeilen und vier Bildspalten wie folgt errechnet: 5 = Quadratwurzel aus (3² + 4²). Das euklidische Abstandsmaß wird vorzugsweise dann verwendet, wenn Überfüllungen gebildet werden sollen, die sich in alle Richtungen gleichmäßig ausbreiten.

Figur **7b** zeigt im gleichen Ausschnitt von Figur **9** einen Teil einer Überfüllung, bei der ein richtungsabhängiges Abstandsmaß verwandt wurde. Wie durch die Richtungspfeile angedeutet, breitet sich die Überfüllung in verschiedenen Richtungen ungleichmäßig aus. Richtungsabhängige Abstandsmaße werden vorzugsweise verwendet, um Ausrichtungsfehler bei der Mehrfarbenreproduktion, die ebenfalls richtungsabhängig sind, zu verringern mit möglichst geringem Einfluß in den Richtungen, in denen keine oder nur geringe Ausrichtungsfehler zu erwarten sind.

Vorzugsweise wird die Bildung **250** von Überfüllungen in einem Überfüllungsbestimmungsgebiet mit Hilfe einer Distanzkartierung durchgeführt. Eine Distanzkartierung läuft wie folgt ab:

Eine Distanzkartierung wird in einer Vorlage durchgeführt, die aus Bildelementen besteht, denen Abstandsvektoren zugeordnet sind. Anfangs sei den Bildelementen außerhalb des Kartierungsgebiets ein verschwindender Abstandsvektor sowie den Bildelementen innerhalb des Kartierungsgebiets ein bestimmter Abstandsvektor zugeordnet, der einen bestimmten Höchst-Abstand ausdrückt.
Alle Bildelemente der Vorlage werden nach einem bestimmten Schema mehr als einmal aufgesucht. Dabei wird jedem Bildelement ein neuer Abstandsvektor zugeordnet, der sich aus der Summe des Abstandsvektors zu einem seiner unmittelbaren Nachbarn und dessen Abstandsvektor errechnet, sofern der Wert des Summenvektors den Wert des alten Abstandsvektors im Sinne eines bestimmten mathematischen Abstandsmaßes unterschreitet.

Eine Beschreibung für eine bestimmte Methode der Distanzkartierung ist beispielsweise beschrieben in einem Aufsatz von P.-E. Danielsson: "Euclidean Distance Mapping", der in der Zeitschrift "Computer Graphics and Image Processing", Band 14, Seite 227-248 (1980) veröffentlicht ist.

Mittels einer Distanzkartierung können Farbwerte, die zu Bildelementen außerhalb des Überfüllungsbestimmungsgebiets gehören, auf Bildelemente innerhalb des Überfüllungsbestimmungsgebiets als Überfüllungen fortgepflanzt werden, wie folgt:

Es wird eine Distanzkartierung in einer Vorlage durchgeführt, die aus Bildelementen besteht, denen Abstandsvektoren und bestimmte, fortzupflanzende Farbwerte zugeordnet sind. Anfangs sei den Bildelementen außerhalb des Überfüllungsbestimmungsgebiets ein verschwindender Abstandsvektor und ein bestimmter, fortzupflanzender Farbwert, sowie den Bildelementen innerhalb des Überfüllungsbestimmungsgebiets ein bestimmter Abstandsvektor, der einen bestimmten Höchst-Äbstand ausdrückt, und vorzugsweise ein neutraler, fortzupflanzender Farbwert zugeordnet.
Alle Bildelemente der Vorlage werden nach einem, bestimmten Schema mehr als einmal aufgesucht. Dabei wird jedem Bildelement ein neuer Abstandsvektor zugeordnet, der sich aus der Summe des Abstandsvektors zu einem seiner unmittelbaren Nachbarn und dessen Abstandsvektor errechnet, sofern der Wert der Abstandssumme den Wert des alten Abstandsvektors im Sinne eines bestimmten mathematischen Abstandsmaßes unterschreitet. In diesem Fall wird der fortzupflanzende Wert des unmittelbaren Nachbarn mit dem alten fortzupflanzenden Wert des Bildelements zu einem neuen fortzupflanzenden Wert des Bildelements verknüpft.

Ein Beispiel der eben beschriebenen Fortpflanzung von Farbwerten zeigt Figur **8c** und **8f** mit den "Verästelungen", die von Start-Bildelementen einer Überfüllungsquelle zu Ziel-Bildelementen in einem Überfüllungsbestimmungsgebiet weisen.

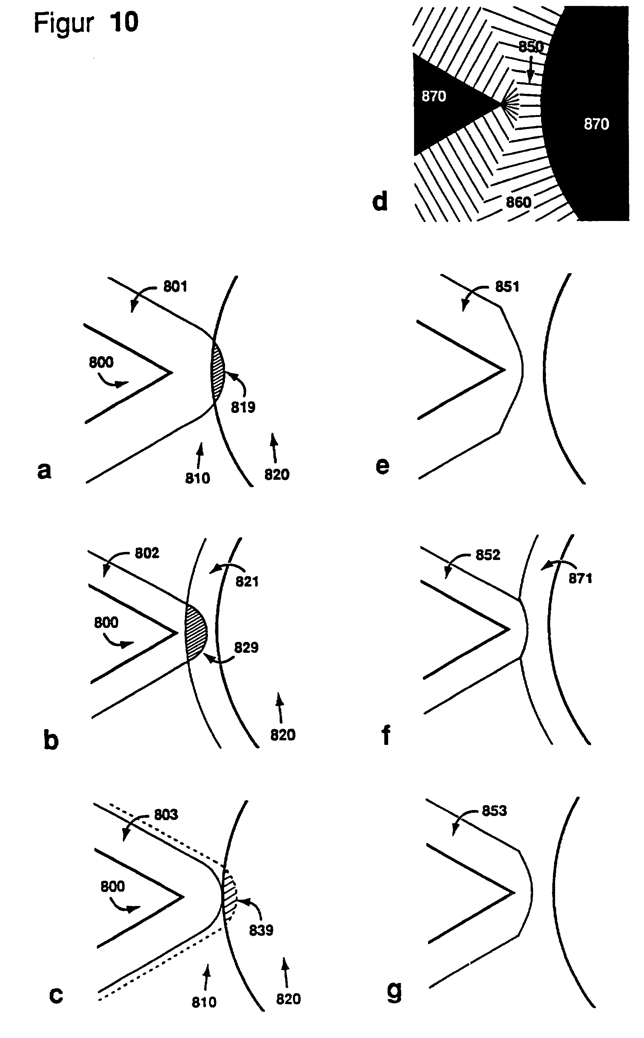

An Engstellen von Gebieten, in denen Überfüllungen gebildet werden sollen, treten häufig Probleme auf. Dabei können unter anderem folgende Erscheinungen (siehe Figur **10a** bis **10c)** auftreten: (**1**) eine Überfüllung **801** aus einem Gebiet **800** in ein Gebiet **810** überschneidet ein benachbartes Gebiet **820** und bildet eine unerwünschte Überlagerung bei der Reproduktion **819**; (2) Überfüllungen **802** und **821** aus verschiedenen Gebieten **800** und **820** überschneiden sich gegenseitig und bilden eine unerwünschte Überlagerung bei der Reproduktion **829**; eine Überfüllung **803** aus einem Gebiet **800** in ein Gebiet **810** kommt einem benachbarten Gebiet **820** zu nahe und tritt bei geringfügigen Fehlausrichtungen bei der Reproduktion in diesem Gebiet hervor **829**. Die genannten Erscheinungen treten bei einfachen Verfahren auf, die beim Erzeugen von Überfüllungen einen ungestörten Verlauf derselben annehmen.

Weitgehend vermieden werden diese Erscheinungen wenn dafür gesorgt wird, daß Überfüllungen die Mitte von Engstellen nicht überschreiten. So treten sie nicht unmittelbar hervor und widersetzen sich dem Hervortreten durch Fehlausrichtungen bei der Reproduktion in allen Richtungen maximal. Figur **10d** zeigt in einem Ausschnitt die Distanzkartierung des zu den Beispielen in Figur **10a** bis **10c** gehörenden Überfüllungsbestimmungsgebiets **860**. Sie ist schematisch mit "Fallinien" **850** (Linien größter Abstandsänderung, wie vorher die "Verästelungen" in Figur **8**) ohne Einschränkung auf eine bestimmte Überfüllweite dargestellt. Die Fallinien weisen von Bildelementen des Überfüllungsbestimmungsgebietes **860** auf nächstgelegene Elemente außerhalb des Überfüllungsgebietes **870.** Überfüllungen, die nach einer bevorzugten Ausgestaltung des erfindungsgemäßen Verfahrens gebildet werden, folgen stets der Einschränkung, die "Mitte", oder anschaulich ausgedrückt, die "Distanzscheiden" eines Überfüllungsbestimmungsgebietes nicht zu überschreiten. Diese Eigenschaft ist unabhängig von der oder den vorgegebenen Überfüllweiten **851, 852, 853**. Sie ist ebenfalls unabhängig davon, ob Überfüllungen an Engstellen allein **851, 853** oder mehrfach **852** und **871** auftreten.

Verfahren nach dem Stand der Technik, die beim Erzeugen von Überfüllungen zunächst einen ungestörten Verlauf annehmen und bereits erzeugte Überfüllungen oder andere benachbarte beziehungsweise nahegelegene Gebiete der Vorlage gesondert berücksichtigen, müssen, um beispielseise einen wie oben beschriebenen, wünschenswerten Verlauf der Überfüllungen zu erzielen, die Gestalt der einfachen Überfüllungen oft mit erheblichem Aufwand anpassen oder verändern.

Das erfindungsgemäße Verfahren bildet sämtliche Überfüllungen einer Ausgangsvorlage ohne jegliche Vergleiche von Überfüllungen untereinander oder mit Farbgebieten der Ausgangsvorlage.

Farbverläufe stellen ein anderes Problem für Überfüllungen dar. Bei Überfüllungen von Farbgebieten mit einem Farbverlauf kommt es auf die gleichmäßige Übernahme des Farbverlaufs in die Überfüllung an. Sie können mit Verfahren nach dem Stand der Technik oft nur mit hohem Arbeitsaufwand aufgestellt werden.

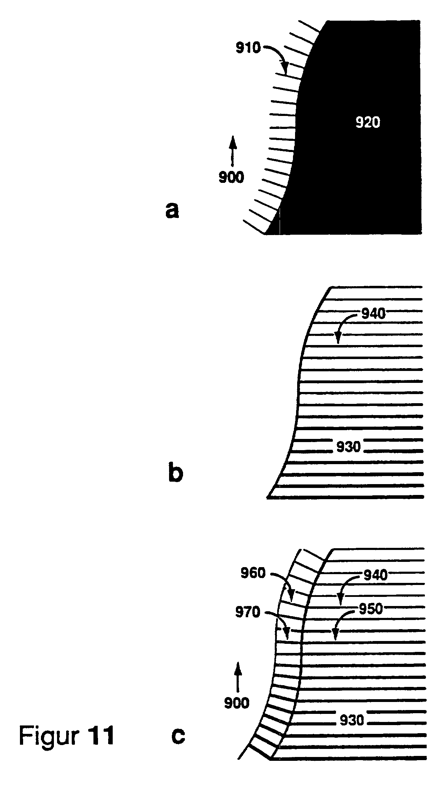

Figur **11** zeigt die grundsätzliche Vorgehensweise des erfindungsgemäßen Verfahrens beim Überfüllen von Farbgebieten mit einem Farbverlauf. In Figur **11a** ist die Distanzkartierung eines Überfüllungsbestimmungsgebietes **900** wieder mittels "Fallinien" **910** dargestellt. Sie weisen von Bildelementen des Überfüllungsbestimmungsgebietes **900** auf nächstgelegene Elemente außerhalb des Überfüllungsgebietes **920**. In einer benachbarten Überfüllungsquelle **930** mit einem angenommenen, linearen Farbverlauf sind Bildelemente gleicher Farbe schematisch durch Linien gleicher Stärke **940** dargestellt. In Überfüllungen, die nach einer bevorzugten Ausgestaltung des erfindungsgemäßen Verfahrens gebildet werden, folgen verschiedene Farben **940, 950** eines Verlaufs in einer Überfüllungsquelle **930** stets den "Fallinien" **910** eines Überfüllungsbestinunungsgebietes **900** und setzen so einen Farbverlauf gleichmäßig **960, 970** fort.

Das erfindungsgemäße Verfahren bildet Überfüllungen von Farbgebieten mit Farbverläufen ohne jeglichen zusätzlichen Aufwand gegenüber Überfüllungen von einfachen Farbgebieten mit "flachen" Farben.

Gemäß einer weiteren bevorzugten Ausführungsform des erfindungsgemäßen Verfahrens wird beim Verknüpfen der Überdeckungswerte im Befehlsschrit **360** (siehe Figur **4**) die Entfernung zwischen Ziel- und Start-Bildelementen berücksichtigt, zum Beispiel um Überfüllungen ihrer Ausbreitung nach abzuschwächen.

Angenommen eine Ausgangsvorlage **110** enthalte Textbestandteile, dann werden für diese vorzugsweise andere Überfüllungsregeln angewandt als für die übrigen Teile der Ausgangsvorlage, z.B. um die Form von Buchstaben möglichst wenig zu stören.

Es gibt Situationen, in denen die erfindungsgemäß gebildeten Überfüllungen bevorzugt als Zwischenergebnisse gespeichert werden. Damit wird vermieden, daß Überdeckungswerte von Farbauszügen der Ausgangsvorlage überschrieben werden, die für weitere Überfüllungen benötigt werden. Das ist zum Beispiel dann der Fall, wenn Überfüllungen gebildet werden sollen, die sich in zwei zusammentreffenden Farbgebieten ausbreiten sollen, insbesondere, wenn beide Farbgebiete Farbverläufe aufweisen.

Die Erfindung ist verwendbar in Verbindung mit einem an sich bekannten Bildbearbeitungssystem, wobei das erfindungsgemäße Verfahren als sogenanntes Zusatzprogramm oder "Plug-In" einsetzbar ist.

Mit der Erfindung können Vorlagen bearbeitet werden, die entweder mittelbar oder unmittelbar als Druckvorlagen für den Mehrfarbendruck dienen.

In bevorzugter Ausgestaltung des erfindungsgemäßen Verfahrens wird die Ausgangsvorlage zuerst in Teilflächen zerlegt, vorzugsweise in Streifen oder Kacheln, wobei sich die Teilflächen gegenseitig überlappen, um Randfehler zu vermeiden. Dann wird jede Ausgangsteilfläche einzeln bearbeitet und danach mit den übrigen bearbeiteten Teilflächen zu einer ganzen bearbeiteten Vorlage zusammengefügt.

Eine erfindungsgemäße Vorrichtung zum Aufbereiten einer aus Bildelementen bestehenden Ausgangsvorlage enthält vorzugsweise einen Rasterbildprozessor (raster image processor, kurz RIP genannt) zum Bearbeiten und einen Rahmenpuffer (frame buffer) zum Speichern der Ausgangsvorlage und von Hilfsfarbkanälen. Beide Einrichtungen werden z.B. in elektronischen Anlagen zur Druckvorbereitung verwandt.

Zur Steuerung der Einrichtungen der erfindungsgemäßen Vorrichtung wird vorzugsweise ein Rechenprogramm auf einem dafür eingerichteten Rasterbildprozessor ausgeführt. Insbesondere kann dieses Rechenprogramm in einer Seitenbeschreibungssprache (page description language) formuliert sein, z.B. in PostScript (PostScript ist ein eingetragenes Warenzeichen der Adobe Systems Inc. in San Jose, CA 95110, USA).

## Patentansprüche

1. Verfahren zum Aufbereiten einer aus Bildelementen bestehenden Ausgangsvorlage zum Erstellen von bearbeiteten Vorlagen für die Mehrfarbenreproduktion mit den Schritten:
(a) Einteilen der Ausgangsvorlage in Gebiete, die jeweils einer Farbklasse zugeordnet sind,
(b) Ermitteln von Ziel-Hildelementen innerhalb des Gebietes jeder Farbklasse wobei jeweils ein Ziel-Bildelement ermittelt wird durch Zuordnen des Bildelementes innerhalb dieses Gebietes zu einem, Start-Bildelement außerhalb dieses Gebietes, das gemäß einem bestimmten Abstandsmaß nächstgelegen ist,
(c) Kennzeichnen der ermittelten Ziel-Bildelement als unspezifische Überfüllungen mit den Farbklassen der zugeordneten Start-Bildelemente und den zugehörigen Abstandsmaßen, und
(d) Bilden von Überfüllungen durch Auswahl der Ziel-Bildelemente, deren Abstandsmaß innerhalb einer bestimmten Überfüllweite liegt und deren Farbklasse, die im Schritt (a) zugeordnet wurde, zusammen mit der Farbklasse einer in den Schritten (b) und (c) gebildeten unspezifischen Überfüllung jeweils einer bestimmten Überfüllungsregel entspricht.

2. Verfahren nach Anspruch 1, wobei im Schritt (b) das Zuordnen der Bildelemente für jedes Gebiet mittels einer zugehörigen Distanzkartierung durchgeführt wird.

3. Verfahren nach Anspruch 1 oder 2, wobei die Ausgangsvorlage in Vektorform oder in einer gemischten Vektor- bzw. Rasterform vorliegt und vor der Durchführung der Schritte (a) bis (d) in Rasterform, vorzugsweise in eine Matrix von Bildelementen umgewandelt wird.

4. Verfahren nach Anspruch 1 bis 3, wobei im Schritt (d) insbesondere nach der Auswahl nach Abstandswerten die Auswahl nach Farbklassenpaaren für Bildelemente der Ausgangsvorlage durchgeführt wird.

5. Verfahren nach Anspruch 1 bis 3, wobei im Schritt (d) insbesondere nach der Auswahl nach Abstandswerten die Auswahl nach Farbklassenpaaren in einer vektorisierten Darstellung durchgeführt wird, vorzugsweise in einer geometrischen Darstellung der Umrisse von Bildelementen, die zu gleichen Klassenpaaren gehören.

6. Verfahren nach Anspruch 1 bis 3, wobei im Schritt (d) Überfüllungen nach beiden Seiten benachbarter Farbklassen gebildet werden.

7. Verfahren nach Anspruch 6, wobei eine vektorisierte Darstellung der Überfüllungen nach beiden Seiten durchgeführt wird.

8. Verfahren nach Anspruch 4 oder 6, wobei die Überfüllungen in Rasterform der Ausgangsvorlage in Raster- oder Vektorform hinzugefügt oder mit ihr verknüpft werden.

9. Verfahren nach Anspruch 5 oder 7, wobei die Überfüllungen in vektorisierter Form der Ausgangsvorlage in Raster- oder Vektorform hinzugefügt oder mit ihr verknüpft werden.

10. Verfahren nach Anspruch 5 oder 7, wobei die vektorisierten Überfüllungen in Rasterform gewandelt der Ausgangsvorlage in Raster- oder Vektorform hinzugefügt oder mit ihr verknüpft werden.

11. Verfahren zum Aufbereiten einer aus Bildelementen bestehenden Ausgangsvorlage, die mehrere Farbgebiete aufweist, wobei jeweils gleichartige Farbgebiete voneinander getrennt sein können, zum Erstellen von bearbeiteten Vorlagen für die Mehrfarbenreproduktion mit den Schritten:
(a) Bilden eines Überfüllungsbestimmungsgebiets, das aus einem oder mehreren ersten gleichartigen Farbgebieten besteht,
(b) Bestimmen der Überfüllungsquelle, die Bildelemente aufweist, deren Farbe nach bestimmten Überfüllungsregeln die ersten gleichartigen Farbgebiete überfüllen können,
(c) Ermitteln von Ziel-Bildelementen innerhalb des Überfüllungsbestimmungsgebiets durch Zuordnen der Bildelemente, zu denen ein Start-Bildelement, das außerhalb des Überfüllungsbestimmungsgebiets liegt, nach einem bestimmten Abstandsmaß nächstgelegen ist und innerhalb einer bestimmten Überfüllweite liegt, und
(d) Verknüpfen der Farben der Ziel-Bildelemente mit den Farben der zugeordneten Start-Bildelemente nach einer Verknüpfungsregel,
wobei der Überfüllungsvorgang mit den Schritten (a) bis (d) für weitere gleichartige Farbgebiete und die zugehörigen Überfüllungsquellen wiederholt werden kann.

12. Verfahren nach Anspruch 11, wobei im Schritt (c) die Zuordnung der Bildelemente mittels einer Distanzkartierung durchgeführt wird.

13. Verfahren nach einem der Ansprüche 1 bis 12, wobei jede Farbe oder Farbklasse mindestens einem Farbauszug zugeordnet ist.

14. Verfahren nach Anspruch 13, wobei im Schritt (d) Überdeckungswerte von Farbauszügen der Ziel-Bildelemente mit Überdeckungswerten von Farbauszügen der Start-Bildelemente verknüpft werden.

15. Verfahren nach einem der Ansprüche 1 bis 14, wobei das Abstandsmaß eine mathematische Abstandsfunktion ist, vorzugsweise ein euklidisches Abstandsmaß ist.

16. Verfahren nach einem der Ansprüche 1 bis 15, wobei das Abstandsmaß richtungsabhängig ist.

17. Verfahren nach einem der Ansprüche 1 bis 16, wobei beim Verknüpfen der Überdeckungswerte von Farbauszügen der Ziel-Bildelemente mit den Überdeckungswerten von Farbauszügen der zugeordneten Start-Bildelemente abhängig von der Entfernung des jeweiligen Ziel-Bildelements vom zugeordneten Start-Bildelement unterschiedliche Verknüpfungsregeln angewandt werden.

18. Verfahren nach Anspruch 17, wobei die Verknüpfungsregel so variiert wird, daß mit zunehmender Entfernung eines Ziel-Bildelements von einem Start-Bildelement der Anteil des Überdeckungswerts von Farbauszügen des zugeordneten Start-Bildelements kleiner wird.

19. Verfahren nach einem der Ansprüche 1 bis 18, wobei eine Vorlage mehrere Bereiche aufweist, für die jeweils unterschiedliche Überfüllungsregeln gelten.

20. Verfahren nach einem der Ansprüche 1 bis 19, wobei Überfüllungen für einen oder mehrere Überfüllungsvorgänge als Zwischenergebnisse gespeichert werden und mit weiteren Überfüllungsergebnissen oder Zwischenergebnissen verknüpft werden.

21. Verfahren nach einem der Ansprüche 1 bis 20, wobei das Verfahren im Verlauf einer an sich bekannten Bildbearbeitung ausgeführt wird.

22. Verfahren nach einem der Ansprüche 1 bis 21, wobei die bearbeiteten Vorlagen zum Erstellen von Druckvorlagen für den Mehrfarbendruck dienen.

23. Verfahren nach einem der Ansprüche 1 bis 22, wobei das Verfahren auf Teilflächen, vorzugsweise Streifen oder Kacheln, angewandt wird, die durch Zerlegung der Ausgangsvorlage gebildet werden, jede Ausgangsteilfläche einzeln bearbeitet und danach mit den übrigen bearbeiteten Teilflächen zu einer ganzen bearbeiteten Vorlage zusammengefügt wird.

24. Vorrichtung zum Aufbereiten einer aus Bildelementen bestehenden Ausgangsvorlage zum Erstellen von bearbeiteten Vorlagen für die Mehrfarbenreproduktion mit:
(a) einer ersten Einrichtung zum Einteilen der Ausgangsvorlage in Gebiete, die jeweils einer Farbklasse zugeordnet sind,
(b) einer zweiten Einrichtung zum Ermitteln von Ziel-Bildelementen innerhalb des Gebietes jeder Farbklasse wobei jeweils ein Ziel-Bildelement ermittelt wird durch Zuordnen des Bildelementes, innerhalb dieses Gebietes zu einem, Start-Bildelement außerhalb dieses Gebietes, das gemäß einem bestimmten Abstandsmaß nächstgelegen ist,
(c) einer dritten Einrichtung zum Kennzeichnen der ermittelten Ziel-Bildelement als unspezifische Überfüllungen mit den Farbklassen der zugeordneten Start-Bildelemente und den zugehörigen Abstandsmaßen, und
(d) einer vierten Einrichtung zum Bilden von Überfüllungen durch Auswahl der Ziel-Bildelemente, deren Abstandsmaß innerhalb einer bestimmten Überfüllweite liegt und deren Farbklasse, die im Schritt (a) zugeordnet wurde, zusammen mit der Farbklasse einer in den Schritten (b) and (c) gebildeten unspezifischen Überfüllung jeweils einer bestimmten Überfüllungsregel entspricht.

25. Vorrichtung zum Aufbereiten einer aus Bildelementen bestehenden Ausgangsvorlage, die mehrere Farbgebiete aufweist, wobei jeweils gleichartige Farbgebiete voneinander getrennt sein können, zum Erstellen von bearbeiteten Vorlagen für die Mehrfarbenreproduktion mit:
(a) einer ersten Einrichtung zum Bilden eines Überfüllungsbestimmungsgebiets, das aus einem oder mehreren ersten gleichartigen Farbgebieten besteht,
(b) einer zweiten Einrichtung zum Bestimmen der Überfüllungsquelle, die Bildelemente aufweist, deren Farbe nach bestimmten Überfüllungsregeln die ersten gleichartigen Farbgebiete überfüllen können,
(c) einer dritten Einrichtung zum Ermitteln von Ziel-Bildelementen innerhalb des Überfüllungsbestimmungsgebiets durch Zuordnen der Bildelemente, zu denen ein Start-Bildelement, das außerhalb des Überfüllungsbestimmungsgebiets liegt, nach einem bestimmten Abstandsmaß nächstgelegen ist und innerhalb einer bestimmten Überfüllweite liegt, und
(d) einer vierten Einrichtung zum Verknüpfen der Farben der Ziel-Bildelemente mit den Farben der zugeordneten Start-Bildelemente nach einer Verknüpfungsregel.

26. Vorrichtung nach Anspruch 24 oder 25, wobei die erste bis vierte Einrichtung mittels eines Rasterbildprozessors, der vorzugsweise mindestens einen Rahmenpuffer aufweist, bereitgestellt wird.

27. Vorrichtung nach einem der Ansprüche 24 bis 26, wobei die Einrichtungen bzw. der Rasterbildprozessor nach Verfahren eines der Ansprüche 1 bis 23 gesteuert wird.

## Claims

1. A method of preparing a primary original consisting of picture elements for producing processed originals for polychromatic reproduction, comprising the following steps:
(a) partitioning the primary original into regions each of which is assigned to a colour class;
(b) determining target picture elements within the region of each colour class, one target picture element being determined in each class by assigning the picture element within said region to a source picture element that is located outside said region and closest according to a predetermined distance measure;
(c) labelling the determined target picture elements as unspecific traps with the colour classes of the assigned source picture elements and the respective distance measures; and
(d) generating traps by selecting the target picture elements whose distance measure is within a predetermined trap width and each colour class of which, as assigned in step (a), corresponds together with the colour class of an unspecific trap determined in steps (b) and (c) to a predetermined trapping rule.

2. The method according to claim 1, wherein in step (b), the assignment of the picture elements for each region is carried out by means of a respective distance mapping.

3. The method according to claim 1 or 2, wherein the primary original is in vector form or in a mixed vector and raster form and is converted into a raster form, preferably into a matrix of picture elements, before steps (a) to (d) are performed.

4. The method according to claims 1 to 3, wherein in step (d), particularly after the selection according to distance values, the selection according to colour class pairs is carried out for picture elements of the primary original.

5. The method according to claims 1 to 3, wherein in step (d), particularly after the selection according to distance values, the selection according to colour class pairs is carried out in a vectorized representation, preferably in a geometric representation of the outlines of picture elements which belong to identical pairs of classes.

6. The method according to claims 1 to 3, wherein in step (d) traps to both sides of adjacent colour classes are generated.

7. The method according to claim 6, wherein a vectorized representation of traps to both sides is carried out.

8. The method according to claim 4 or 6, wherein the traps in raster form are added to or combined with the primary original in raster or vector form.

9. The method according to claim 5 or 7, wherein the traps in vectorized form are added to or combined with the primary original in raster or vector form.

10. The method according to claim 5 or 7, wherein, upon being converted to raster form, the vectorized traps are added to or combined with the primary original in raster or vector form.

11. The method of preparing a primary original consisting of picture elements and comprising a plurality of colour regions, wherein similar colour regions may be separated from each other, for producing processed originals for polychromatic reproduction, comprising the steps of:
(a) forming a trap determination region consisting of one or more first similar colour regions;
(b) determining the trap source which comprises picture elements whose colour can trap the first similar colour regions according to predetermined trapping rules;
(c) determining target picture elements within the trap determination region by assigning the picture elements to which a source picture element located outside the trap determination region is closest according to a predetermined distance measure and which is located within a predetermined trap width; and
(d) combining the colours of the target picture elements with the colours of the assigned source picture elements according to a combination rule,
wherein the trapping process comprising steps (a) to (d) may be repeated for further similar colour regions and the respective trap sources.

12. The method according to claim 11, wherein in step (c), the picture elements are assigned by means of a distance mapping.

13. The method according to any of claims 1 to 12, wherein each colour or colour class is assigned to at least one colour separation.

14. The method according to claim 13, wherein in step (d), separation values of colour separations of the target picture elements are combined with the separation values of colour separations of the source picture elements.

15. The method according to any of claims 1 to 14, wherein the distance measure is a mathematical distance function, preferably a Euclidean distance measure.

16. The method according to any of claims 1 to 15, wherein the distance measure is orientation-dependent.

17. The method according to any of claims 1 to 16, wherein different combination rules are applied when combining the separation values of colour separations of the target picture elements with the separation values of colour separations of the assigned source picture elements, depending on the distance between each target picture element and the assigned source picture element.

18. The method according to claim 17, wherein the combination rules are varied such that, as the distance of a target picture element from a source picture element increases, the portion of the separation value of colour separations of the assigned source picture element decreases.

19. The method according to any of claims 1 to 18, wherein an original comprises a plurality of regions to which different trapping rules apply.

20. The method according to any of claims 1 to 19, wherein the traps for one or more trapping processes are stored as intermediate results and combined with further trap results or intermediate results.

21. The method according to any of claims 1 to 20, wherein the method is carried out in the course of an image processing step that is known per se.

22. The method according to any of claims 1 to 21, wherein the processed originals are used for producing printing documents for multicolour printing.

23. The method according to claims 1 to 22, wherein the method is applied to partial areas, preferably bands or tiles, which are obtained by partitioning the primary original, and wherein each initial partial area is individually processed and then combined with the remaining processed partial areas to a complete processed original.

24. An device for preparing a primary original consisting of picture elements for producing processed originals for polychromatic reproduction, comprising:
(a) first means for partitioning the primary original into regions each of which is assigned to a colour class;
(b) second means for determining target picture elements within the region of each colour class, one target picture element being determined in each class by assigning the picture element within said region to a source picture element that is located outside said region and closest according to a predetermined distance measure;
(c) third means for labelling the determined target picture elements as unspecific traps with the colour classes of the assigned source picture elements and the respective distance measures; and
(d) fourth means for generating traps by selecting the target picture elements whose distance measure is within a predetermined trap width and each colour class of which, as assigned in step (a), corresponds together with the colour class of an unspecific trap determined in steps (b) and (c) to a predetermined trapping rule.

25. A device for preparing a primary original consisting of picture elements and comprising a plurality of colour regions, wherein similar colour regions may be separated from each other, for producing processed originals for multicolour reproduction, comprising:
(a) first means for forming a trap determination region consisting of one or more first similar colour regions;
(b) second means for determining the trap source which comprises picture elements whose colour may trap the first similar colour regions according to predetermined trapping rules;
(c) third means for determining target picture elements within the trap determination region by assigning the picture elements to which a source picture element located outside the trap determination region is closest according to a predetermined distance measure and which is located within a predetermined trap width; and
(d) fourth means for combining the colours of the target picture elements with the colours of the assigned source picture elements according to a combination rule.

26. The device according to claim 24 or 25, wherein the first to fourth means are provided by means of a raster image processor that preferably comprises at least one frame buffer.

27. The device according to any of claims 24 to 26, wherein the means or the raster image processor are controlled according to methods of any of claims 1 to 23.

## Revendications

1. Procédé pour préparer un document source constitué d'éléments d'image pour produire des documents traités pour la reproduction polychrome comprenant les étapes consistant à:
(a) diviser le document source en zones qui sont respectivement coordonnées à une catégorie de couleur,
(b) détecter des éléments d'image cibles à l'intérieur de la zone de chaque catégorie de couleur, un élément d'image cible étant chaque fois détecté, en coordonnant l'élément d'image à l'intérieur de cette zone à un élément d'image de départ à l'extérieur de cette zone, qui est placé le plus près conformément à une mesure de distance déterminée,
(c) caractériser les éléments d'image cibles détectés comme des aplats non spécifiques avec les catégories de couleur des éléments d'image de départ coordonnés et avec les mesures de distance y relatives, et
(d) former des aplats en sélectionnant les éléments d'image cibles dont la mesure de distance se situe dans une étendue d'aplat déterminée et dont la catégorie de couleur qui a été coordonnée au cours de l'étape (a), de même que la catégorie de couleur d'un aplat non spécifique formé au cours des étapes (b) et (c), correspond respectivement à une règle de formation d'aplat déterminée.

2. Procédé selon la revendication 1, dans lequel l'affectation des éléments d'image pour chaque zone au cours de l'étape (b) est effectuée au moyen d'une restitution de distance y relative.

3. Procédé selon la revendication 1 ou 2, dans lequel le document source est en forme vectorielle ou dans une forme mixte vectorielle ou tramée et est transformé avant l'exécution des étapes (a) à (d) en forme tramée, de préférence en une matrice d'éléments d'image.

4. Procédé selon les revendications 1 à 3, dans lequel au cours de l'étape (d), en particulier après la sélection selon des valeurs de distance, la sélection est effectuée selon des paires de catégories de couleur pour des éléments d'image du document source.

5. Procédé selon les revendications 1 à 3, dans lequel au cours de l'étape (d), en particulier après la sélection selon des valeurs de distance, la sélection est effectuée selon des paires de catégories de couleur dans une représentation vectorisée, de préférence dans une représentation géométrique des contours des éléments d'image qui appartiennent à des mêmes paires de catégories.

6. Procédé selon les revendications 1 à 3, dans lequel au cours de l'étape (d), des aplats sont formés selon les catégories de couleur voisines des deux côtés.

7. Procédé selon la revendication 6, dans lequel une représentation vectorisée des aplats est effectuée des deux côtés.

8. Procédé selon la revendication 4 ou 6, dans lequel les aplats en forme tramée sont ajoutés en forme tramée ou vectorielle au document source ou combinés avec lui.

9. Procédé selon la revendication 5 ou 7, dans lequel les aplats en forme vectorisée sont ajoutés en forme tramée ou vectorielle au document source ou combinés avec lui.

10. Procédé selon la revendication 5 ou 7, dans lequel les aplats vectorisés transformés en forme tramée sont ajoutés en forme tramée ou vectorielle au document source ou combinés avec lui.

11. Procédé pour préparer un document source constitué d'éléments d'image qui présente plusieurs zones de couleur, dans lequel des zones de couleur semblables peuvent respectivement être séparées les unes des autres pour produire des documents traités pour la reproduction polychrome comprenant les étapes consistant à:
(a) former une zone de détermination d'aplat qui est constituée d'une ou plusieurs premières zones de couleur semblables,
(b) déterminer la source d'aplats, qui présente des éléments d'image, dont la couleur peut être amenée à former un aplat, selon des règles de formation d'aplat déterminées, par les premières zones de couleur semblables,
(c) détecter des éléments d'image cibles dans la zone de détermination d'aplat en coordonnant les éléments d'image le plus près desquels un élément d'image de départ, qui est situé en dehors de la zone de détermination d'aplat, est placé selon une mesure de distance déterminée et qui se situe à l'intérieur d'une étendue d'aplat déterminée,
(d) combiner les couleurs des éléments d'image cibles avec les couleurs des éléments d'image de départ selon une règle de combinaison,
dans lequel le procédé de formation d'aplat avec les étapes (a) à (d) peut être répété pour d'autres zones de couleur semblables et pour les sources d'aplat y relatives.

12. Procédé selon la revendication 11, dans lequel au cours de l'étape (c), la coordination des éléments d'image est effectuée au moyen d'une restitution de distance.

13. Procédé selon une des revendications 1 à 12, dans lequel chaque couleur ou catégorie de couleur est coordonnée au moins un tirage en couleur.

14. Procédé selon la revendication 13, dans lequel au cours de l'étape (d), les valeurs de recouvrement de tirages en couleur des éléments d'image cibles sont combinées avec des valeurs de recouvrement de tirages en couleur des éléments d'image de départ

15. Procédé selon une des revendications 1 à 14, dans lequel la mesure de distance est une fonction mathématique de distance, de préférence une mesure de distance euclidienne.

16. Procédé selon une des revendications 1 à 15, dans lequel la mesure de distance est fonction de la direction.

17. Procédé selon une des revendications 1 à 16, dans lequel lors de la combinaison des valeurs de recouvrement de tirages en couleur des éléments d'image cibles avec les valeurs de recouvrement de tirages en couleur des éléments d'image de départ coordonnés, des règles de combinaison différentes sont appliquées en fonction de l'éloignement de l'élément d'image cible concerné par rapport à l'élément d'image de départ coordonné.

18. Procédé selon la revendication 17, dans lequel la règle de combinaison est variée de telle manière qu'avec l'éloignement croissant d'un élément d'image cible par rapport à un élément d'image de départ, la part de la valeur de recouvrement de tirages en couleur de l'élément d'image de départ coordonné devient plus petite.

19. Procédé selon une des revendications 1 à 18, dans lequel un document présente plusieurs régions pour lesquels des règles d'aplat différentes s'appliquent chaque fois.

20. Procédé selon une des revendications 1 à 19, dans lequel des aplats pour un ou plusieurs processus de formation d'aplat sont mis en mémoire oomme résultats intermédiaires et sont combinés avec d'autres résultats d'aplat ou à des résultats intermédiaires.

21. Procédé selon une des revendications 1 à 20, dans lequel le procédé est appliqué au cours du déroulement d'un traitement d'images connu en soi.

22. Procédé selon une des revendications 1 à 21, dans lequel les documents traités servent à produire des maquettes pour l'impression polychrome.

23. Procédé selon une des revendications 1 à 22, dans lequel le procédé est appliqué sur des surfaces partielles, de préférence des bandes ou des carreaux qui sont formées par le fractionnement du document source, chaque surface source partielle étant traitée individuellement et ensuite jointe aux autres surfaces partielles traitées pour former un document complet traité.

24. Dispositif pour préparer un document source constitué d'éléments d'image pour produire des documents traités pour la reproduction polychrome comprenant:
(a) un premier dispositif pour diviser le document source en zones qui sont respectivement coordonnées à une catégorie de couleur,
(b) un deuxième dispositif pour détecter des éléments d'image cibles à l'intérieur de la zone de chaque catégarie de couleur, un élément d'image cible étant chaque fois détecté, en coordonnant l'élément d'image à l'intérteur de cette zone à un élément d'image de départ à l'extérieur de cette zone, qui est placé le plus près conformément à une mesure de distance déterminée,
(c) un troisième dispositif pour caractériser les éléments d'image cibles déterminés comme des aplats non spécifiques avec les catégories de couleur des éléments d'image de départ coordonnés et avec les mesures de distance y relatives, et
(d) un quatrième dispositif pour former des aplats en sélectionnant les éléments d'image cibles dont la mesure de distance se situe dans une étendue d'aplat déterminée et dont la catégorie de couleur qui a été coordonnée au cours de l'étape (a), de même que la catégorie de couleur d'un aplat non spécifique formé au cours des étapes (b) et (c), correspond respectivement à une règle de formation d'aplat déterminée.

25. Dispositif pour préparer un document source constitué d'éléments d'image qui présente plusieurs zones de couleur, dans lequel des zones de couleur semblables peuvent respectivement être séparées les unes des autres pour produire des documents traités pour la reproduction polychrome comprenant:
(a) un premier dispositif pour former une zone de détermination d'aplat qui est constituée d'une ou plusieurs premières zones de couleur semblables,
(b) un deuxième dispositif pour déterminer la source d'aplats, qui présente des éléments d'image, dont la couleur peut être amenée à former un aplat, selon des règles de formation d'aplat déterminées, par les premières zones de couleur semblables,
(c) un troisième dispositif pour détecter des éléments d'image cibles dans la zone de détermination d'aplat en coordonnant les éléments d'image le pius près desquels un élément d'image de départ, qui est situé en dehors de la zone de détermination d'aplat, est placé selon une mesure de distance déterminée et qui se situe à l'intérieur d'une étendue d'aplat déterminée,
(d) un quatrième dispositif pour combiner les couleurs des éléments d'image cibles avec les couleurs des éléments d'image de départ selon une règle de combinaison.

26. Dispositif selon la revendication 24 ou 25, dans lequel le premier au quatrième dispositif est préparé au moyen d'un processeur d'images tramées qui présente de préférence au moins un tampon cadre.

27. Dispositif selon une des revendications 24 à 26, dans lequel les dispositifs ou le processeur d'images tramées est piloté conformément au procédé selon une des revendications 1 à 23.
